# EUROPEAN PATENT APPLICATION

(11) **EP 2 535 812 A2**
(43) Date of publication of application: **19.12.2012**
(21) Application number: 12171596.5
(22) Date of filing: 12.06.2012
(51) Int. Cl.: G06F 9/54

(54) **Information processing apparatus, information processing method, program, and storage medium**

(30) Priority: 13.06.2011 JP 2011131573
(71) Applicant: CANON KABUSHIKI KAISHA, Ohta-ku Tokyo 146-8501 (JP)
(72) Inventor: Tomita, Makoto, Ohta-ku, Tokyo (JP)
(74) Representative: Garner, Jonathan Charles Stapleton

(57) **Abstract**

An information processing apparatus (110) includes a first processing unit (205) configured to monitor (307) a storage area and to process data in response to the data being stored into the storage area, a storage unit (109) configured to store setting information containing area information indicating the storage area monitored by the first processing unit (205), and a second processing unit (204) for transmitting data to the first processing unit (205) via the storage area monitored by the first processing unit (205), the second processing unit (204) including a control unit (304, 303) configured to read out the setting information from the storage unit (109), to determine whether the storage area monitored by the first processing unit (205) exists based on the setting information, and to enable a user interface (501, 505) for receiving a user operation to store the data into the storage area determined to exist.

## Description

### BACKGROUND OF THE INVENTION

### Field of the Invention

The present invention relates to an information processing apparatus, an information processing method, a program, and a storage medium.

### Description of the Related Art

Generally, when data is continuously processed by two different modules, the data is transmitted and received via a folder called a hot folder that can be referred to by both the two modules (for example, refer to Japanese Patent Application Laid-Open No. 2000-118095).

For example, the receiver-side module monitors generation of a file in a specific folder. The transmitter-side module provides a file for which data processing is completed in the monitored folder, which triggers an operation of the receiver-side module, thereby realizing a file transfer between the two modules. This method has such an advantage that processing for transmitting and receiving data does not have to be programmed in the transmitter-side module and the receiver-side module in advance, and this eliminates the necessity of the implementation such as defining inter-module (inter-system) communication, allowing each of the modules to be generated as an independent module.

However, according to the file transfer processing via the hot folder, the transmitter-side module and the receiver-side module individually independently operate, whereby the transmitter-side module is not involved with whether the receiver-side module actually starts the processing. Therefore, when the transmitter-side module generates a file in the hot folder in such a state that the receiver-side module is not yet ready for data processing, this results in a failure in a start of the next processing. In other words, this method has a problem in that the transmitter-side module displays the status of the processing as if the processing has been normally completed, whereby, even if the processing is delayed, a user cannot notice that the processing is delayed.

### SUMMARY OF THE INVENTION

The present invention is directed to an information processing method enabling a more appropriate cooperation in data processing.

According to a first aspect of the present invention, there is provided an information processing apparatus as specified in claims 1 to 8. According to a second aspect of the present invention, there is provided an information processing method as specified in claims 9 and 10. According to a third aspect of the present invention, there is provided a program as specified in claims 11 and 12. According to a fourth aspect of the present invention, there is provided a storage medium as specified in claim 13.

According to exemplary embodiments of the present invention, it is possible to realize a more appropriate cooperation in data processing.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Fig. 1 illustrates an example of a hardware configuration of a personal computer (PC).

Fig. 2 illustrates an example of a module configuration.

Figs. 3A and 3B each illustrate an example of a module configuration.

Fig. 4 is an example of a flowchart illustrating check processing at activation.

Figs. 5A, 5B, and 5C each illustrate an example of a user interface (UI).

Fig. 6 is an example of a flowchart illustrating check processing at activation.

Fig. 7 is an example of a flowchart illustrating check processing at activation.

Fig. 8 illustrates an example of a configuration of a document processing system.

Figs. 9A and 9B each illustrate an example of a module configuration.

Figs. 10A and 10B each illustrate an example of a module configuration.

Fig. 11A is an example of a flowchart illustrating document transmission processing.

Fig. 11B is an example of a flowchart illustrating check processing at document selection

Figs. 12A and 12B each illustrate an example of a data return information file.

Figs. 13A and 13B each illustrate an example of a UI.

Fig. 14 is an example of a flowchart illustrating document return processing.

### DESCRIPTION OF THE EMBODIMENTS

Various exemplary embodiments, features, and aspects of the invention will be described in detail below with reference to the drawings.

A first exemplary embodiment of the present invention will be described based on an example in which all functions of a document processing system are realized by a general information processing apparatus (computer). The present exemplary embodiment is characterized by the method for controlling a user interface of a transmitter-side application in a document processing system that transmits and receives data via a hot folder (an example of a storage area), which will be described below.

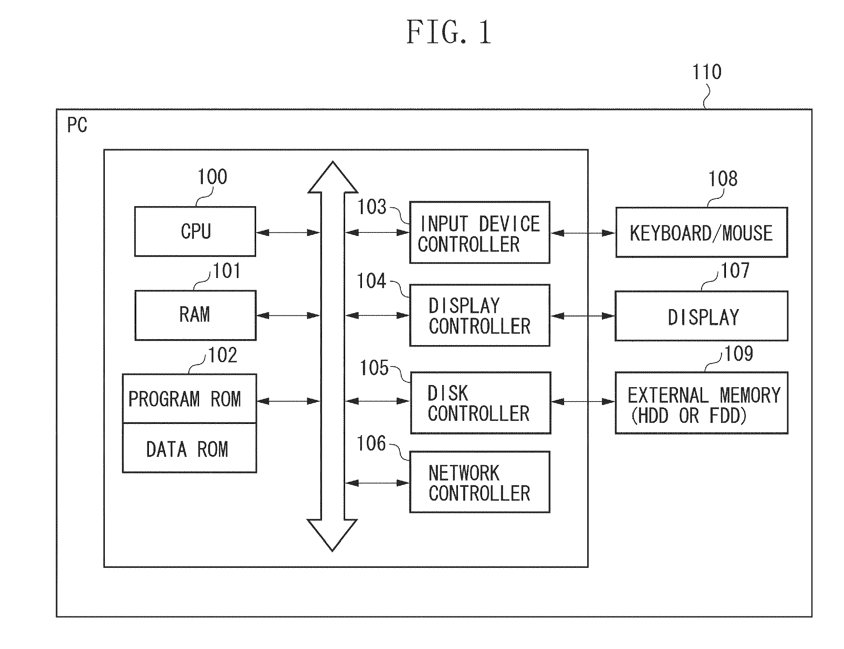

Fig. 1 illustrates an example of the hardware configuration of a personal computer (PC) 110 included in the document processing system according to the present exemplary embodiment. The hardware configuration of a general information processing apparatus can be applied to the PC 110.

A central processing unit (CPU) 100 reads out programs such as an operating system (OS) and an application stored in a program read only memory (ROM) of a ROM 102 or an external memory 109, loads them onto a random access memory (RAM) 101, and executes them. The functions of the modules and the processing of the flowcharts that will be described below are realized by the execution of the programs by the CPU 100. However, a part or all of the functions of the modules and the processing of the flowcharts that will be described below may be realized by using dedicated hardware.

The RAM 101 functions as, for example, a main memory and a work area for the CPU 100. An input device controller 103 controls an input from an input device such as a keyboard/mouse 108 and a not-illustrated pointing device. A display controller 104 controls a screen displayed on a display 107, which may be embodied by any of various types of display apparatuses. A disk controller 105 controls data access to the external memory 109 such as a hard disk drive (HDD) or a flexible disk drive (FDD), which stores various types of data. A network controller 106 is connected to a network, and controls communication with another apparatus connected to the network.

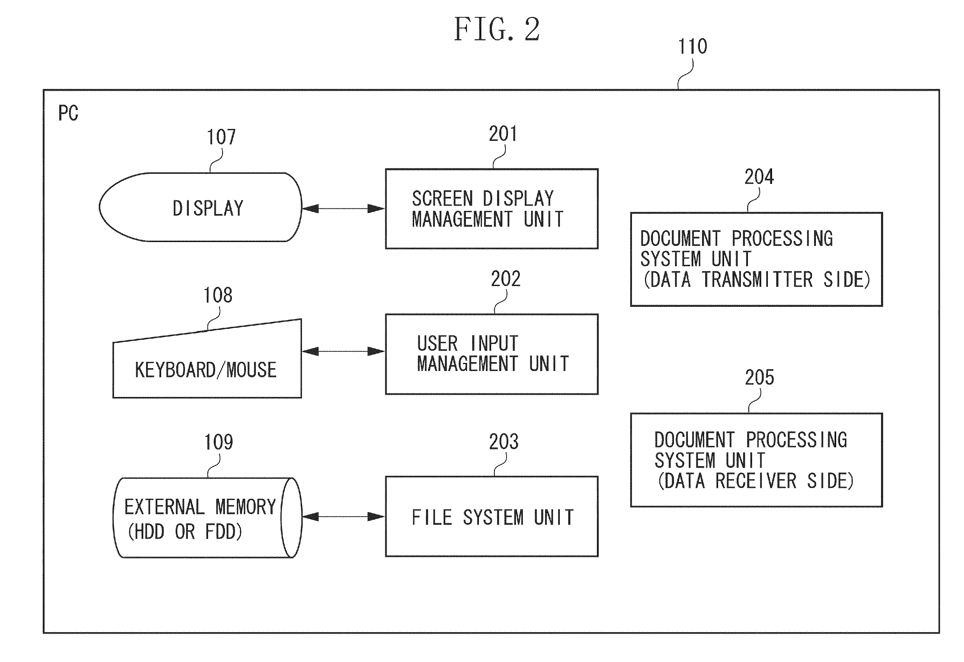

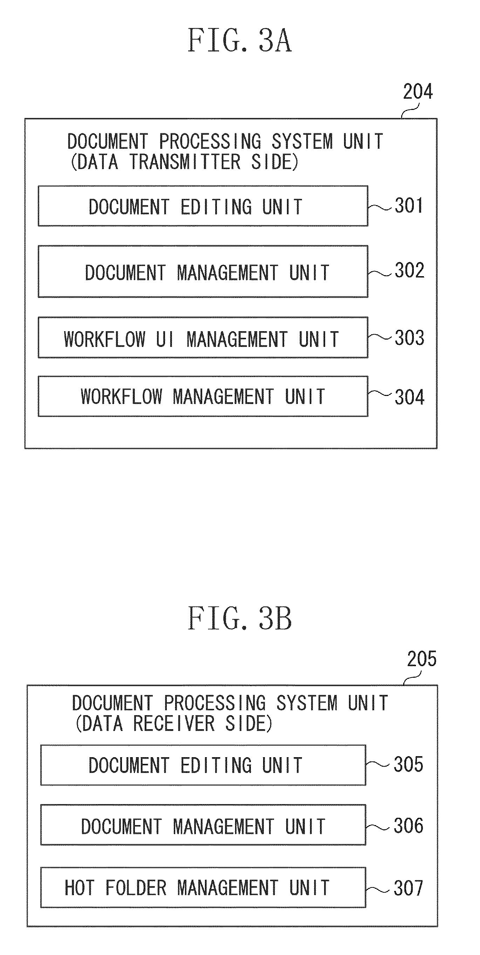

Figs. 2, 3A, and 3B each illustrate an example of the module configuration of the PC 110. All functions of the document processing system are realized by modules working on the PC 110. The PC 110 includes a screen display management unit 201, a user input management unit 202, a file system unit 203, a document processing system unit 204 at a data transmitter side, and a document processing system unit 205 at a data receiver side.

The screen display management unit 201 displays a result of processing by the document processing system units 204 and 205 on the display 107. The user input management unit 202 detects an operation of the keyboard/mouse 108 by a user (a user operation), and issues an instruction to the document processing system units 204 and 205 according to the user operation. The file system unit 203 acquires and stores a document (document data) into the external memory 109 as a file. The document processing system unit 204 transmits a document (a file) to the document processing system unit 205. The document processing system unit 205 receives the document.

Next, the details of the document processing system units 204 and 205 will be described with reference to Figs. 3A and 3B. Fig. 3A illustrates an example of the configuration of the document processing system unit 204. The document processing system unit 204 includes a document editing unit 301, a document management unit 302, a workflow UI management unit 303, and a workflow management unit 304.

The document editing unit 301 edits a document according to an editing execution instruction issued from the user input management unit 202. The document management unit 302 manages a document as a file, and manipulates a document file according to a document manipulation execution instruction issued from the user input management unit 202. The workflow UI management unit 303 instructs the screen display management unit 201 to display a user interface (a transmission operation UI) for receiving a user operation to transmit a document, and switches the displayed screen of the transmission operation UI according to the status of the document transmission destination. The workflow management unit 304 identifies the status of the document transmission destination, and instructs the workflow UI management unit 303 to switch the displayed screen of the transmission operation UI so that the transmission operation UI becomes enabled or disabled.

Fig. 3B illustrates an example of the configuration of the document processing system unit 205. The document processing system unit 205 includes a document editing unit 305, a document management unit 306, and a hot folder management unit 307. The document editing unit 305 edits a document according to an editing execution instruction issued from the user input management unit 202. The document management unit 306 manages a document as a file, and manipulates a document file according to a document manipulation execution instruction issued from the user input management unit 202.

The hot folder management unit 307 monitors a hot folder prepared for receiving data and waits for a document to be input (generated) therein. When a document is generated in the hot folder, the hot folder management unit 307 instructs the document management unit 306 to input the document. For convenience of description, the present exemplary embodiment is described as if the document processing system unit 204 is involved with only the transmitter-side function and the document processing system unit 205 is involved with only the receiver-side function. However, each of the document processing system units 204 and 205 may have both the transmitter-side function and the receiver-side function, and may be configured to exchange data between them. The document processing system units 204 and 205 are an example of a processing unit, which performs processing in response to data being stored into the storage area.

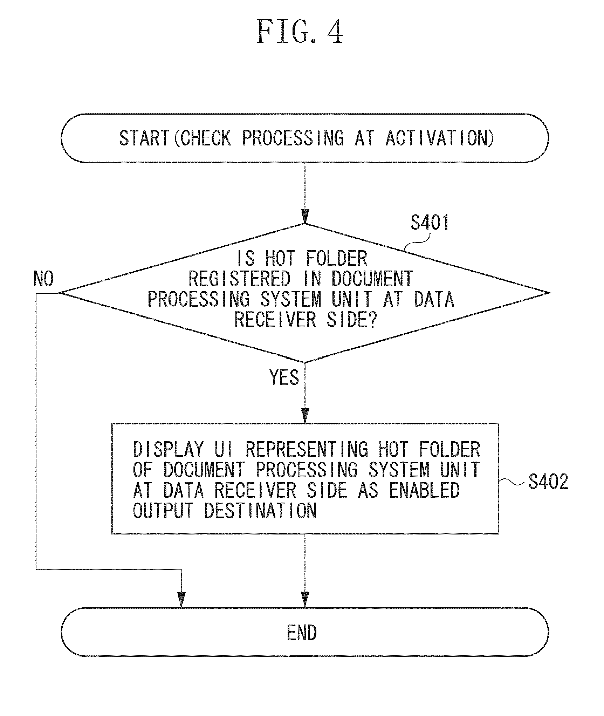

UI control in the document processing system will be described with reference to Fig. 4. Fig. 4 is an example of a flowchart illustrating check processing at activation. When a user applies an operation to activate the document processing system unit 204 at the data transmitter side, the user input management unit 202 detects this operation applied to the keyboard/mouse 108, and instructs the document processing system unit 204 to be activated. For example, the CPU 100 reads out a program regarding the document processing system unit 204 from the external memory 109 to the RAM 101 and executes it, by which the document processing system unit 204 is activated. Then, upon the activation, the document processing system unit 204 performs the check processing at activation according to the flowchart illustrated in Fig. 4.

In step S401, first, the workflow management unit 304 reads out a setting registry (at this time, the workflow management unit 304 may read out a setting file instead of the setting registry) of the hot folder management unit 307 of the document processing system unit 205 at the data receiver side (readout processing). Subsequently, the workflow management unit 304 determines whether the hot folder is set based on the read-out setting information. The setting information such as the setting registry or the setting file contains information (an example of area information) indicating the hot folder monitored by the document processing system unit 205. The setting registry is, for example, set by the document processing system unit 205 via the user input management unit 202, and stored in a predetermined storage area in a storage unit provided to the PC 110.

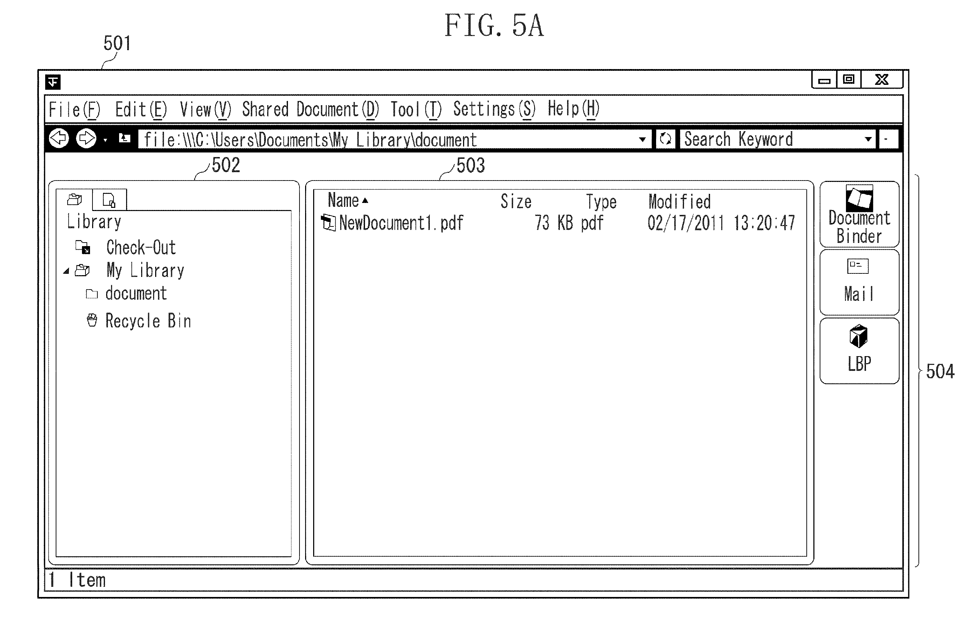

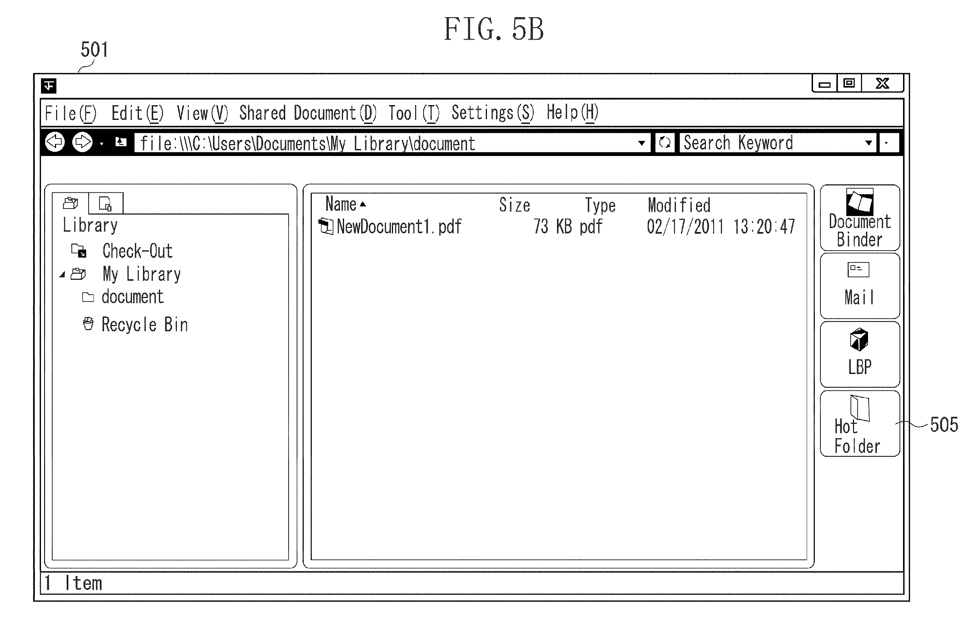

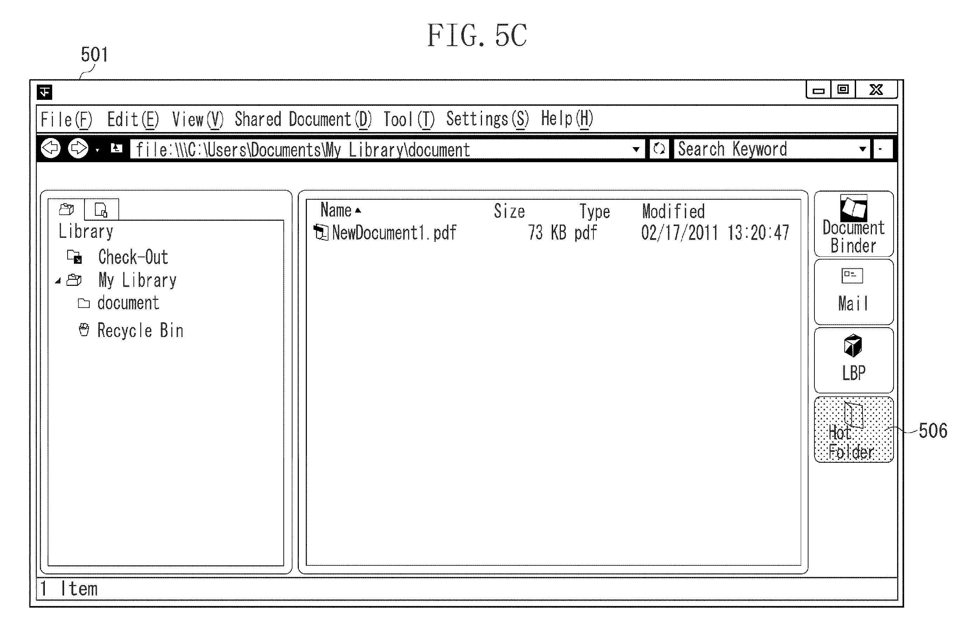

If the workflow management unit 304 determines in step S401 that the hot folder is not set (NO in step S401), the workflow management unit 304 instructs the workflow UI management unit 303 so that a document processing UI 501 illustrated in Fig. 5A is displayed on the display 107. Then, the processing ends. On the other hand, if the workflow management unit 304 determines in step S401 that the hot folder is set (YES in step S401), the processing proceeds to step S402. Figs. 5A, 5B, and 5C each illustrate an example of a UI (the document processing UI 501) for receiving various types of operations to a document. The document processing UI 501 includes a document position selection field 502, a document selection field 503, and a document output destination selection field 504. For example, the document processing UI 501 illustrated in Fig. 5A receives various types of operations to a document, and presents, to a user, the result of the processing by the document editing unit 301 or the document management unit 302 according to the operation.

In step S402, the workflow management unit 304 instructs the workflow UI management unit 303 to display an icon that represents the position of the hot folder set in the setting registry as an output destination (a folder to which data is output) in an enabled state. Upon receiving this instruction, the workflow UI management unit 303 instructs the screen display management unit 201 so that the icon representing the output destination (for example, an icon 505 illustrated in Fig. 5B) is displayed on the document output destination selection field 504 in an enabled state.

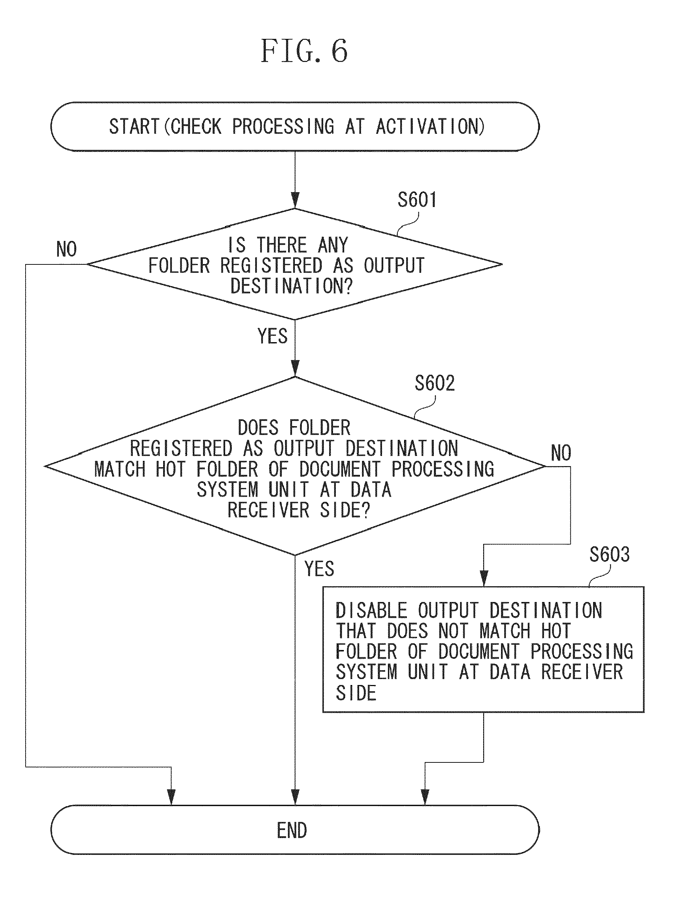

It should be noted that the present exemplary embodiment is not limited to this configuration. For example, the document processing system may be configured in such a manner that the document processing system unit 204 at the data transmitter side registers output destination information (an example of registered area information, and for example, the positions of folders) represented by one or more icons indicating output destinations to be displayed on the document output destination selection field 504, into the storage unit such as the external memory 109 in advance. Fig. 6 is an example of a flowchart illustrating check processing at activation in this case.

In step S601, the workflow management unit 304 reads out the output destination information from the storage unit, and checks whether there is a folder registered as an output destination based on the output destination information. If the workflow management unit 304 determines in step S601 that there is such a folder (YES in step S601), the processing proceeds to step S602. On the other hand, if the workflow management unit 304 determines in step S601 that there is not such a folder (NO in step S601), the processing ends.

In step S602, the workflow management unit 304 compares the output destination information with the setting registry of the hot folder management unit 307 of the document processing system unit 205 at the data receiver side, to determine whether the same folder is set in the output destination information and the setting registry. If the workflow management unit 304 determines in step S602 that the same folder is registered in the output destination information and the setting registry (YES in step S602), the workflow management unit 304 instructs the workflow UI management unit 303 to display an icon representing the position of the hot folder set in the setting registry as an output destination in an enabled state. Then, the processing ends. Upon receiving this instruction, the workflow UI management unit 303 instructs the screen display management unit 201 so that the icon corresponding to the hot folder of the setting registry is displayed on the document output destination selection field 504 in an enabled state (for example, like the icon 505 illustrated in Fig. 5B).

On the other hand, if the workflow management unit 304 determines in step S602 that the registered folder does not match the hot folder set in the setting registry or no folder is registered (NO in step S602), the processing proceeds to step S603. In step S603, the workflow management unit 304 instructs the workflow UI management unit 303 to display an icon corresponding to the folder that does not match the hot folder of the setting registry as an icon representing a disabled output destination. Upon receiving this instruction, the workflow UI management unit 303 instructs the screen display management unit 201 so that an icon that a user cannot operate, i.e., an icon in a disabled state (for example, an icon 506 illustrated in Fig. 5C) is displayed on the document output destination selection field 504. In the disabled state, the icon is set so as to be unusable in such a manner that, for example, a user operation to the icon is invalidated. Further, the color of the icon is changed to a different color from a color in a normal state.

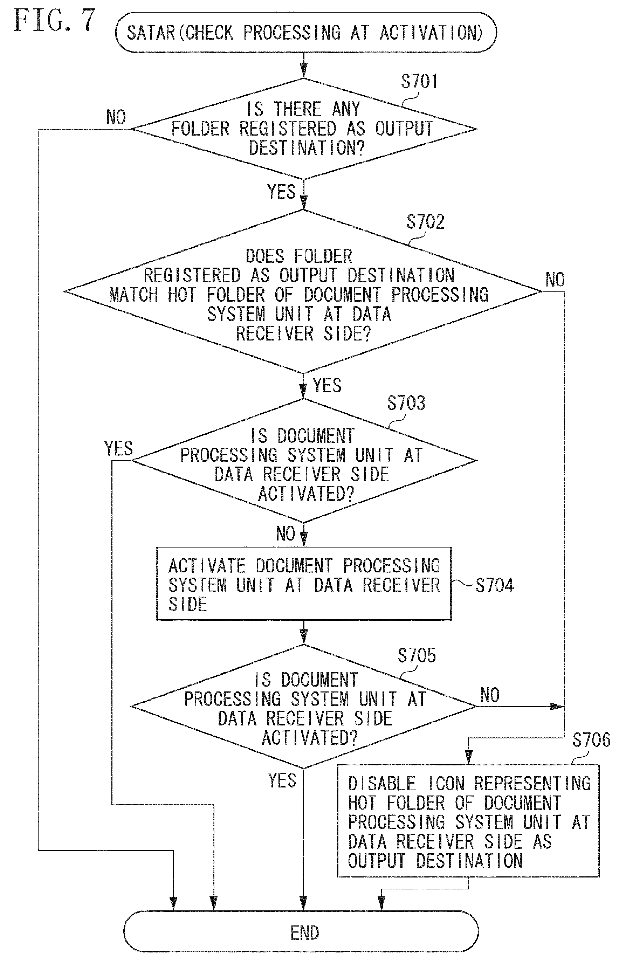

Further, the present exemplary embodiment is not limited to the above-described configuration. For example, in such a configuration that the document processing system unit 204 at the data transmitter side registers the output destination information in the storage unit in advance, the document processing system may be further configured in such a manner that the document processing system unit 205 at the data receiver side is activated if the document processing system unit 205 has not been activated yet. Fig. 7 is an example of a flowchart illustrating check processing at activation in this case.

In step S701, the workflow management unit 304 checks whether there is a folder registered as an output destination based on the output destination information. If the workflow management unit 304 determines in step S701 that there is a registered folder (YES in step S701), the processing proceeds to step S702. On the other hand, if the workflow management unit 304 determines in step S701 that there is no registered folder (NO in step S701), the processing ends.

In step S702, the workflow management unit 304 compares the output destination information with the setting registry of the hot folder management unit 307 to determine whether the same folder is registered in the output destination information and the setting registry. If the workflow management unit 304 determines in step S702 that the same folder is registered in the output destination information and the setting registry (YES in step S702), the processing proceeds to step S703. On the other hand, if the workflow management unit 304 determines in step S702 that the same folder is not registered in the output destination information and the setting registry (NO in step S702), the processing proceeds to step S706.

In step S703, the workflow management unit 304 checks whether the document processing system unit 205 at the data receiver side is activated. The workflow management unit 304 can check whether the document processing system unit 205 is activated by any arbitrary method. For example, this determination may be made based on the existence or absence of a process (task) corresponding to the document processing system unit 205 in the PC 110, or may be made based on the existence or absence of a specific file, which will be described in the description about a second exemplary embodiment.

If the workflow management unit 304 determines in step 703 that the document processing system unit 205 is activated (YES in step S703), the workflow management unit 304 instructs the workflow UI management unit 303 to display an icon representing the position of the hot folder set in the setting registry as an output destination. Then, the processing ends. Upon receiving this instruction, the workflow UI management unit 303 instructs the screen display management unit 201 so that the icon representing the output destination is displayed on the document output destination selection field 504 in an enabled state. On the other hand, if the workflow management unit 304 determines in step S703 that the document processing system unit 205 is not activated (NO in step S703), the processing proceeds to step S704.

In step S704, the workflow management unit 304 activates the document processing system unit 205 at the data receiver side. For example, the CPU 100 reads out the program regarding the document processing system unit 205 from the external memory 109 onto the RAM 101 and executes the program, by which the document processing system unit 205 is activated. Subsequently, in step S705, the workflow management unit 304 determines whether the document processing system unit 205 is activated.

If the workflow management unit 304 determines in step S705 that the document processing system unit 205 is activated (YES in step S705), the workflow management unit 304 instructs the workflow UI management unit 303 to display an icon representing the position of the hot folder set in the setting registry as an output destination. Then, the processing ends. Upon receiving this instruction, the workflow UI management unit 303 instructs the screen display management unit 201 so that the icon representing the output destination is displayed on the document output destination selection field 504 in an enabled state. On the other hand, if the workflow management unit 304 determines in step S705 that the document processing system unit 205 is not activated (NO in step S705), the processing proceeds to step S706.

In step S706, the workflow management unit 304 instructs the workflow UI management unit 303 to display the icon representing the output destination in a disabled state, according to the result of the above-described determination. More specifically, if the workflow management unit 304 determines that a folder different from the hot folder of the setting registry is registered (NO in step S702), the workflow management unit 304 instructs the workflow UI management unit 303 to display this folder as an icon representing the output destination in a disabled state. Further, if the workflow management unit 304 determines that the activation has failed (NO in step S705), the workflow management unit 304 instructs the workflow UI management unit 303 to display all folders as icons representing output destinations in a disabled state. For example, as illustrated in Fig. 5C, upon receiving the instruction, the workflow UI management unit 303 instructs the screen display management unit 201 to display the icon representing the output destination as the icon 506 in a disabled state on the document output destination selection field 504.

According to the above-described configuration, it is possible to control the transmission operation UI 501 of the document processing system unit 204 at the data transmitter side, so as to become enabled only when the document processing system unit 205 at the data receiver side can continue the processing. Therefore, according to the above-described configuration, it is possible to prevent the occurrence of such a situation that the processing is delayed in the document processing system unit 205 at the data receiver side without this state noticed by a user.

The first exemplary embodiment has been described based on an example in which the document processing system unit 204 at the data transmitter side and the document processing system unit 205 at the data receiver side operate on the single PC 110. However, the document processing system may be configured in such a manner that the document processing system unit 204 at the data transmitter side and the document processing system unit 205 at the data receiver side operate on different PCs connected via a network 801. Therefore, a second exemplary embodiment of the present invention will be described as this example. In the following, UI control in the document processing system in this case will be described, mainly focusing on a difference from the first exemplary embodiment.

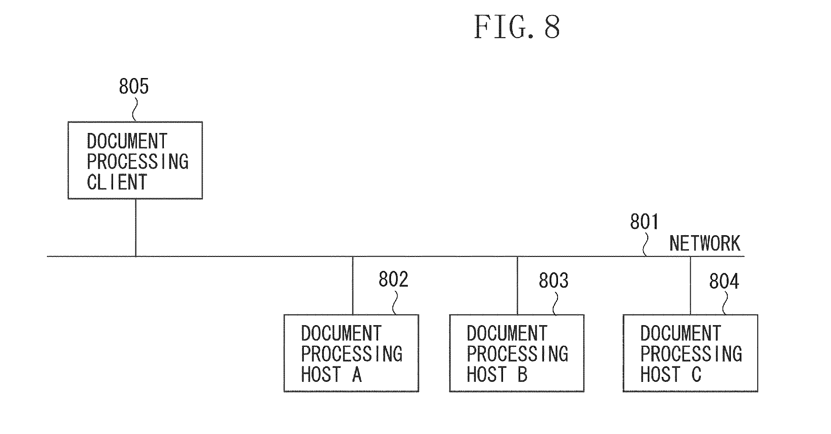

Fig. 8 illustrates an example of the configuration of a document processing system according the present exemplary embodiment. As is the case with the first exemplary embodiment, in the present exemplary embodiment, all functions of the document processing system are realized by a general information processing apparatus (computer). The document processing system includes a plurality of document processing hosts A, B, and C (802, 803, and 804), and a document processing client 805. The plurality of document processing hosts A, B, and C (802, 803, and 804) and the document processing client 805 are connected for communication with one another via the network 801. The document processing host A, B, or C (802, 803, or 804) transfers a document to a hot folder of the document processing client 805, and waits for an input of the document processed by the document processing client 805 into a hot folder.

The document processing client 805 waits for an input of a document from the document processing host A, B, or C (802, 803, or 804) into the hot folder. More specifically, the document processing client 805 receives a document via the hot folder, processes the document, and returns the processed document to the hot folder of the document processing host A, B, or C (802, 803, or 804). The present exemplary embodiment is described based on an example in which a folder on a PC where each document processing system unit operates, which will be described below, is used as the hot folder of each of the document processing client 805 and the document processing hosts A, B, and C (802, 803, and 804). However, the present exemplary embodiment is not limited to this configuration. For example, the document processing system may be configured to use, as the hot folder, a folder on a file server that is connected to the network 801 and that is capable of storing a document.

Each of the document processing hosts A, B, and C (802, 803, and 804), and the document processing client 805 is an example of the information processing apparatus (computer), and the hardware configuration of the information processing apparatus is similar to the first exemplary embodiment, whereby the description thereof will be omitted here.

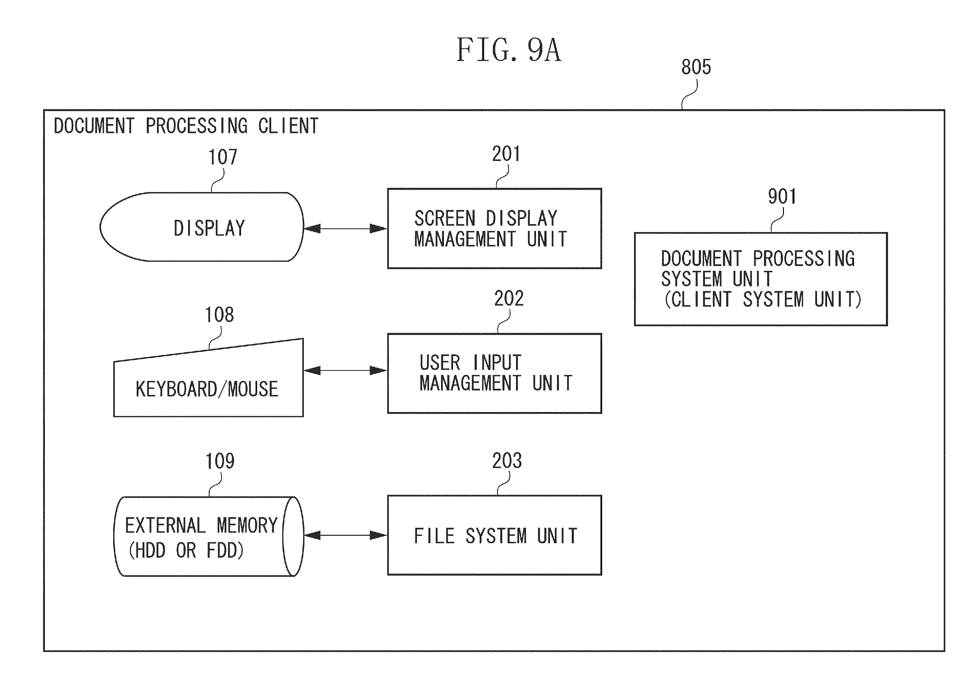

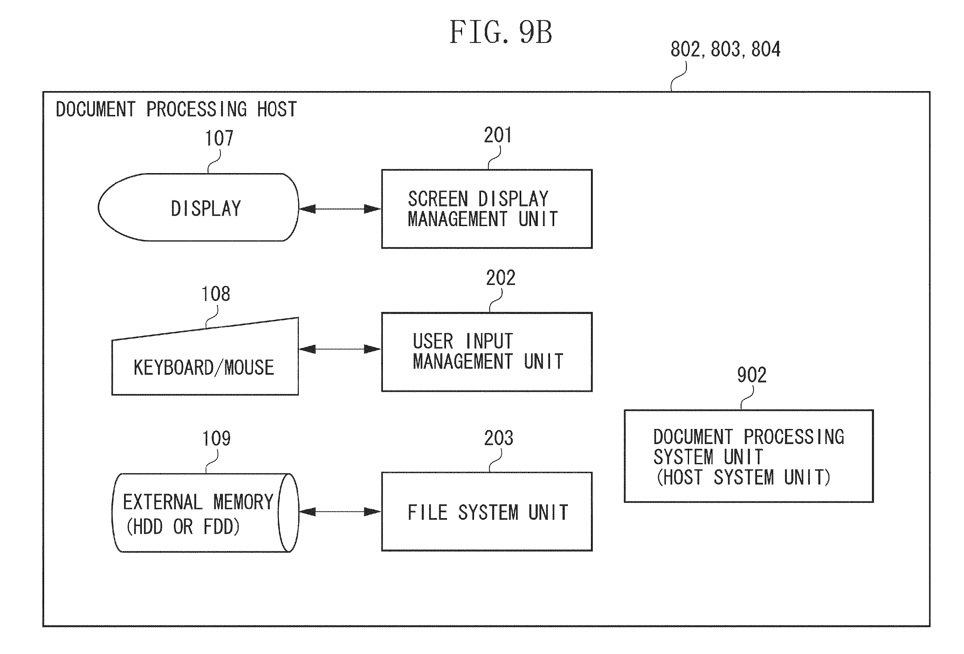

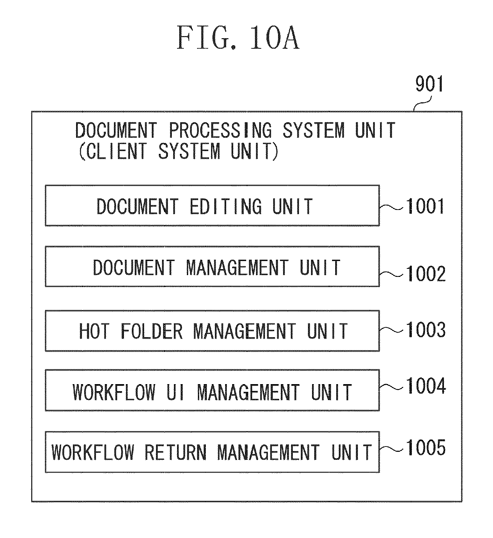

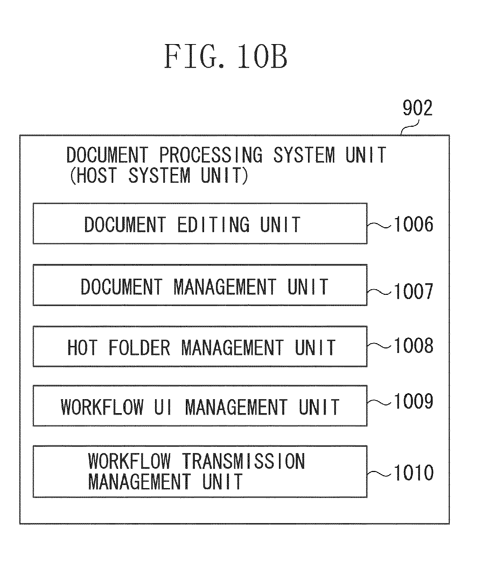

Figs. 9A, 9B, 10A, and 10B each illustrate an example of the configuration of modules included in the document processing system. Fig. 9A illustrates an example of the module configuration in the document processing client 805, and Fig. 9B illustrates an example of the module configuration in the document processing hosts A, B, and C (802, 803, and 804). A document processing system unit (client system unit) 901 operates in the document processing client 805, and a document processing system unit (host system unit) 902 operates in the document processing hosts A, B, and C (802, 803, and 804). Except for these modules, the module configuration is similar to the first exemplary embodiment, and therefore a further description will be omitted here.

Next, the details of the client system unit 901 and the host system unit 902 will be described with reference to Figs. 10A and 10B. Fig. 10A illustrates an example of the configuration of the client system unit 901. The client system unit 901 includes a document editing unit 1001, a document management unit 1002, a hot folder management unit 1003, a workflow UI management unit 1004, and a workflow return management unit 1005.

The document editing unit 1001 edits a document according to an editing execution instruction issued from the user input management unit 202. The document management unit 1002 manages a document as a file, and manipulates a document file according to a file manipulation execution instruction issued from the user input management unit 202. The hot folder management unit 1003 monitors the hot folder prepared for receiving data, and waits for an input of a document from the host system unit 902. When a document is generated in the hot folder, the hot folder management unit 1003 instructs the document management unit 1002 to input a document.

The workflow UI management unit 1004 instructs the screen display management unit 201 to display a transmission operation UI, and controls the displayed screen of the transmission operation UI. The workflow return management unit 1005 interprets a data return information file from the host system unit 902 to determine the status of the host system unit 902, and instructs the workflow UI management unit 1004 to switch the displayed screen of the transmission operation UI. Fig. 10B illustrates an example of the configuration of the host system unit 902. The host system unit 902 includes a document editing unit 1006, a document management unit 1007, a hot folder management unit 1008, a workflow UI management unit 1009, and a workflow transmission management unit 1010.

The document editing unit 1006 edits a document according to an editing execution instruction issued from the user input management unit 202. The document management unit 1007 manages a document as a file, and manipulates a document file according to a document manipulation execution instruction issued from the user input management unit 202. The hot folder management unit 1008 monitors the hot folder prepared for receiving data and waits for an input of a document from the client system unit 901. When a document is generated in the hot folder, the hot folder management unit 1008 instructs the document management unit 1007 to input the document.

The workflow UI management unit 1009 instructs the screen display management unit 201 to display a transmission operation UI, and controls the displayed screen of the transmission operation UI. The workflow transmission management unit 1010 generates a data return information file to be provided to the client system unit 901 during a document transmission operation, and instructs the document management unit 1007 to transmit the generated data return information file together with the document. For convenience of description, the present exemplary embodiment is described such that the document processing system unit 901 is involved with only the client function and the document processing system unit 902 is involved with only the host function. However, each of the document processing system units 901 and 902 may have both the client function and the host function, and may be configured to exchange data between them. The document processing system units 901 and 902 are an example of a processing unit, which performs processing in response to data being stored into the storage area.

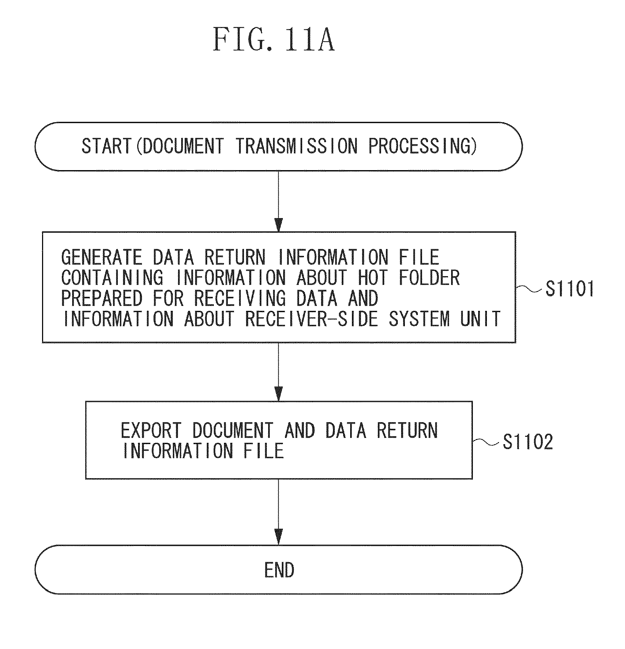

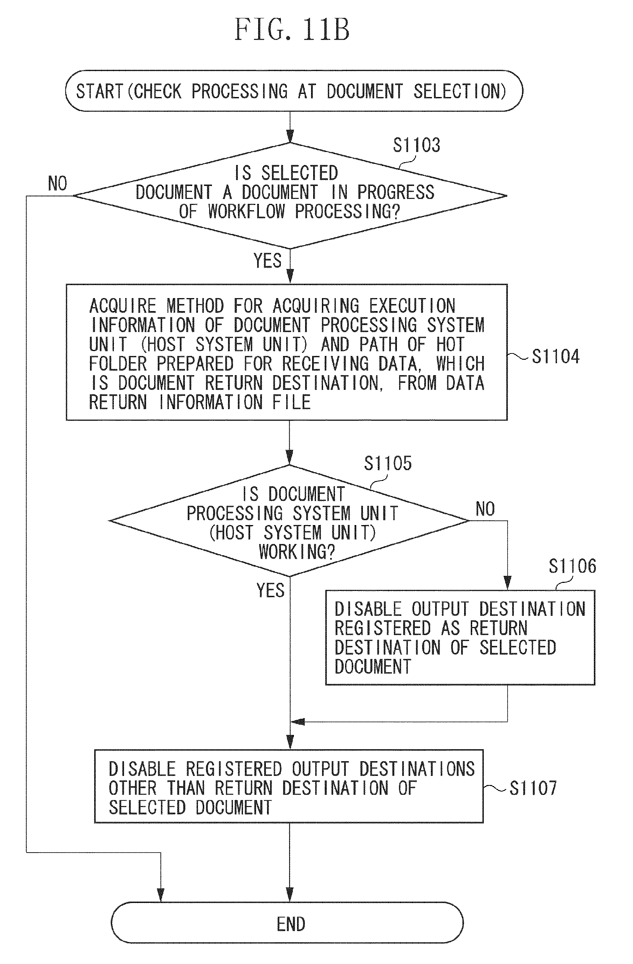

UI control in the document processing system will be described with reference to the flowcharts of Figs. 11A and 11B. Fig. 11A illustrates an example of a flowchart illustrating document transmission processing. This processing will be described based on an example in which any document processing host, for example, the document processing host B 803, receives a user operation to transmit a document to the document processing client 805, and the user input management unit 202 detects this operation applied to the keyboard/mouse 108. At this time, the user input management unit 202 notifies the host system unit 902 of the document transmission instruction. Upon receiving this notification, the host system unit 902 performs the document transmission processing according to the flowchart of Fig. 11A.

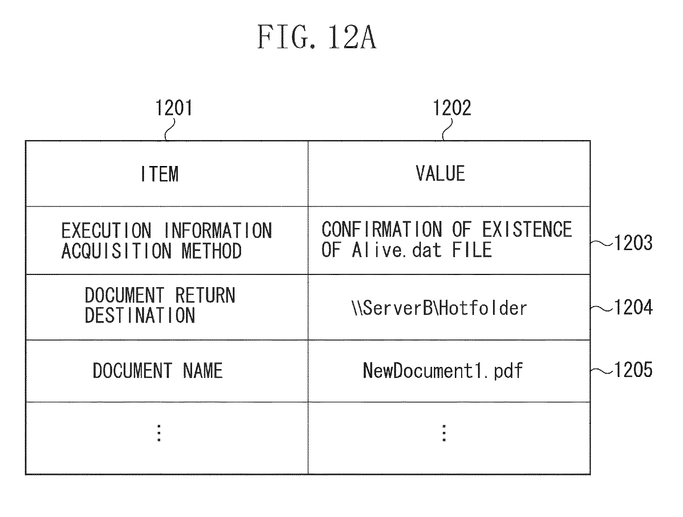

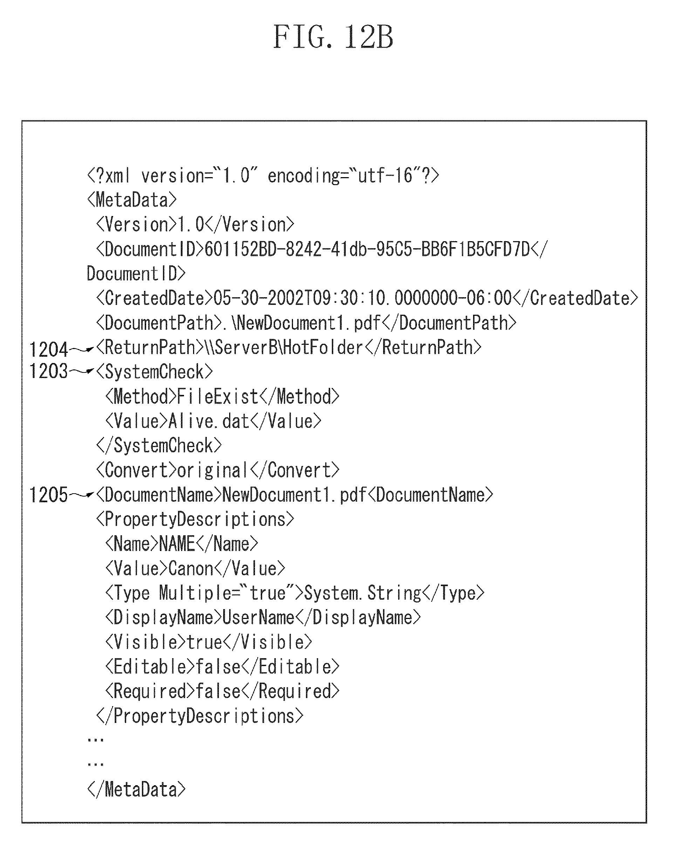

In step S1101, the workflow transmission management unit 1010 generates a data return information file illustrated in Figs. 12A and 12B. Subsequently, in step S1102, the document management unit 1007 generates (exports) the specified document and the data return information file to the transmission destination.

Fig. 12A illustrates an example of the data return information file. The data return information file has a data structure listing items 1201 and values 1202. Further, the data return information file includes information indicating an execution information acquisition method 1203, information indicating a document return destination 1204, and information indicating a document name 1205.

The execution information acquisition method 1203 indicates a method for acquiring information (an example of status information) for identifying the status of the host system unit 902, for example, whether the host system unit 902 is working. The document return destination 1204 is information (an example of the area information) indicating the hot folder that the host system unit 902 monitors, and indicates a destination to which a document to the host system unit 902 should be returned. The document name 1205 indicates the name of a document to be waited for to be provided in this hot folder. During communication, the data return information file may be converted into a data return information file expressed in the data format called Extensible Markup Language (XML) as illustrated in Fig. 12B.

Then, upon detecting generation of a document in the hot folder, the hot folder management unit 1003 in the document processing client 805 instructs the document management unit 1002 to input the document.

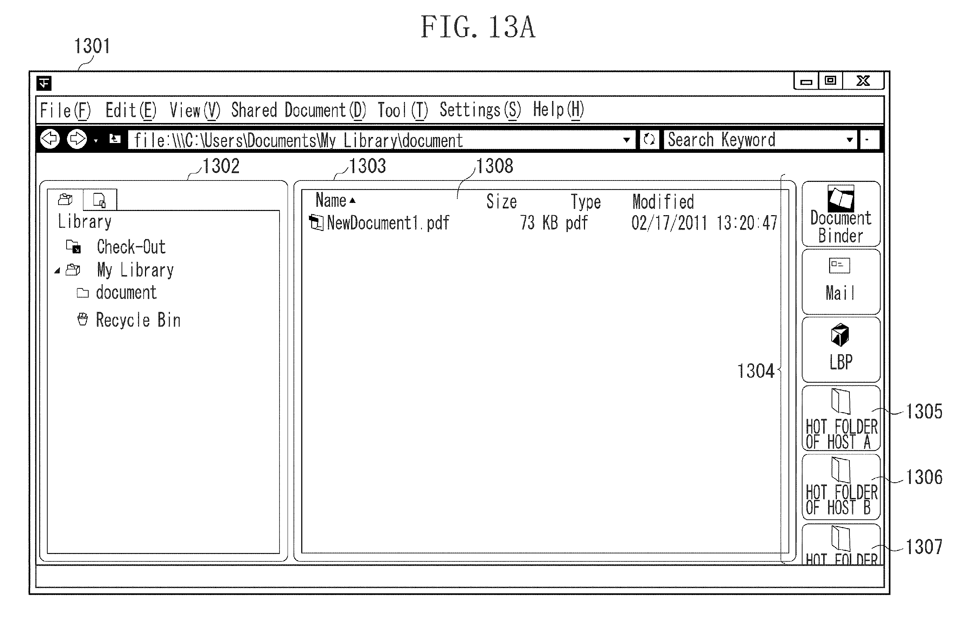

Next, a UI that receives various types of operations to a document input to the document processing client 805 will be described. Fig. 13A illustrates an example of a UI (a document processing UI 1301) provided by the client system unit 901. The document processing UI 1301 includes a document position selection field 1302, a document selection field 1303, and a document output destination selection field 1304. The document processing UI 1301 receives a user operation to a document, and presents, to the user, the result of processing performed by the document editing unit 1001 or the document management unit 1002 according to this operation.

The document output destination selection field 1304 indicates icons representing output destinations registered by the user in advance. The information (an example of the registered area information) indicating output destinations registered by the user in advance is stored in the storage unit such as the external memory 109. In this example, the document output destination selection field 1304 indicates that an icon 1305 representing the document processing host A 802, an icon 1306 representing the document processing host B 803, and an icon 1307 representing the document processing host C 804 are registered.

After completion of editing to the document by the user, when the user applies an operation to select the edited document (for example, a document 1308) to be returned to the document processing host B 803, the user input management unit 202 detects this operation applied to the keyboard/mouse 108. Then, the user input management unit 202 notifies the client system unit 901 of the instruction at document selection. Upon receiving this notification, the client system unit 901 performs check processing at document selection according to the flowchart of Fig. 11B.

In step S1103, the document management unit 1002 checks whether there is a data return information file corresponding to the selected document to determine whether the selected document is a document in progress of workflow processing. At this time, if there is a data return information file corresponding to the selected document (YES in step S1103), the document management unit 1002 determines that the selected document is a document in progress of workflow processing, and then the processing proceeds to step S1104. On the other hand, if there is no data return information file corresponding to the selected document (NO in step S1103), the document management unit 1002 determines that the selected document is not a document in progress of workflow processing, and then the processing ends. At this time, the document management unit 1002 controls the UI in such a manner that, for example, all icons are displayed as enabled icons or disabled icons.

In step S1104, first, the document management unit 1002 notifies the workflow return management unit 1005 of the selection of the document in progress of workflow processing. Upon receiving this notification, the workflow return management unit 1005 acquires the execution information acquisition method 1203 and the document return destination 1204 of the host system unit 902 on the document processing host B 803, to which the document should be returned, from the data return information file. Subsequently, in step S1105, the workflow return management unit 1005 determines whether the host system unit 902 on the document processing host B 803 is working (running) based on the acquired information. In the present exemplary embodiment, this determination is made by determining whether there is a file "Alive.dat", which is generated when the host system unit 902 is activated and is removed when the host system unit 902 is closed, in the location indicated by the path of the document return destination 1204 "¥¥ServerB¥Hotfolder".

If the workflow return management unit 1005 determines in step 1105 that the host system unit 902 is working (YES in step S1105), the processing proceeds to step S1107. On the other hand, if the workflow return management unit 1005 determines in step S1105 that the host system unit 902 is not working (NO in step S1105), the processing proceeds to step S1106. In step S1106, the workflow return management unit 1005 instructs the workflow UI management unit 1004 so that the icon 1306 corresponding to the document return destination 1204 is displayed in a disabled state. Upon receiving this instruction, the workflow UI management unit 1004 instructs the screen display management unit 201 so that the icon 1306 representing the output destination of the document processing host B 803 is displayed in a disabled state on the document output destination selection field 1304.

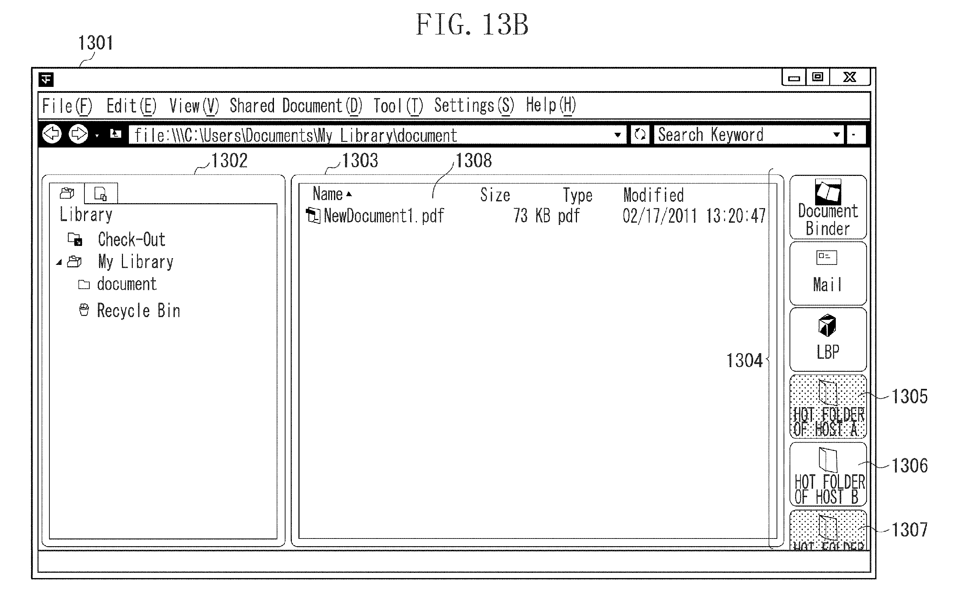

In step S1107, the workflow return management unit 1005 instructs the workflow UI management unit 1004 so that icons other than the icon corresponding to the document return destination 1204, among icons displayed on the document output destination selection field 1304, are displayed in a disabled state. In this example, the workflow return management unit 1005 instructs the workflow UI management unit 1004 so that icons 1305 and 1307, which are icons other than the icon 1306, are displayed in a disabled state. Upon receiving this instruction, the workflow UI management unit 1004 instructs the screen display management unit 201 so that the icons 1305 and 1307, which are icons other than the icon 1306 representing the output destination of the document processing host B 803, are displayed in a disabled state, for example, as illustrated in Fig. 13B. In a case where step S1106 is performed, all of the icons 1305, 1306, and 1307 are displayed in a disabled state on the document output destination selection field 1304.

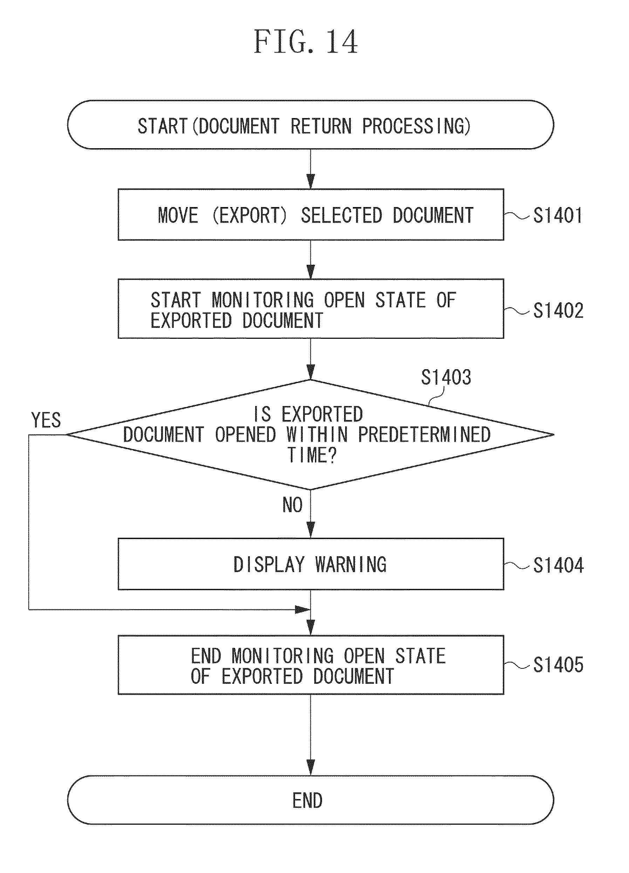

After that, when the user applies an operation to return a document 1308 to the document processing host B 803, the user input management unit 202 detects this operation applied to the keyboard/mouse 108. Then, the user input management unit 202 notifies the client system unit 901 of the document transmission instruction. Upon receiving this notification, the client system unit 901 performs document return processing according to the flowchart of Fig. 14. Fig. 14 is an example of a flowchart illustrating the document return processing.

In step S1401, first, when the workflow UI management unit 1004 receives the notification of the document transmission instruction, the workflow UI management unit 1004 notifies the workflow return management unit 1005 of the fact that the user applies an operation to return the document. Upon receiving this notification, the workflow return management unit 1005 instructs the document management unit 1002 to move (export) the document to the folder (specified folder) specified in advance. The document management unit 1002 moves the selected document to the specified folder.

Subsequently, in step S1402, the workflow return management unit 1005 starts monitoring the open state of the exported document. Subsequently, in step S1403, the workflow return management unit 1005 determines whether the exported document is opened within a predetermined time (before a predetermined time has elapsed from the storage of the document into the hot folder). If the workflow return management unit 1005 determines in step S1403 that the exported document is opened within the predetermined time (YES in step S1403), the processing proceeds to step S1405. On the other hand, if the workflow return management unit 1005 determines in step S1403 that the exported document is not opened within the predetermined time (NO in step S1403), the processing proceeds to step S1404.

In step S1404, first, the workflow return management unit 1005 instructs the workflow UI management unit 1004 to display a warning indicating that the workflow processing is not started for the exported document (reporting that the workflow processing is not performed). Upon receiving this instruction, the workflow UI management unit 1004 instructs the screen display management unit 201 to display, for example, a warning dialog. The user can recognize that the workflow processing is delayed by viewing the warning dialog. In step S1405, the workflow return management unit 1005 stops monitoring the open state of the exported document. Then, the processing ends.

In this way, the present exemplary embodiment has been described based on an example in which the document processing system unit 901 at the data transmitter side and the document processing system unit 902 at the data receiver side operate on different PCs via the network 801. Even in this case, according to the above-described configuration, it is possible to enable the UI of the output destination on the document processing system unit 901 at the data transmitter side only when the document processing system 902 unit at the data receiver side can continue the processing. In other words, according to the above-described configuration, it is possible to prevent the occurrence of such a situation that the processing is delayed in the document processing system unit 902 at the data receiver side, and the user does not notice this state.

An embodiment of the present invention can provide an information processing apparatus comprising: processing means configured to monitor a storage area and to process data in response to the data being stored into the storage area; storage means configured to store setting information containing area information indicating the storage area monitored by the processing means; readout means configured to read out the setting information from the storage means; and control means configured to determine whether the storage area monitored by the processing means exists based on the setting information, and to enable a user interface for receiving a user operation to store the data into the storage area determined to exist.

Preferably, registered area information indicating a plurality of storage areas is stored in the storage means in advance, and the control means enables a user interface corresponding to the storage area monitored by the processing means among user interfaces respectively corresponding to the plurality of storage areas.

Preferably, the control means determines whether the processing means is working, and the control means enables the user interface if the control means determines that the processing means is working.

Preferably, the control means activates the processing means if the control means determines that the processing means is not working.

Another embodiment of the present invention can provide an information processing apparatus connected for communication to an apparatus including processing means configured to monitor a storage area and to process data in response to the data being stored into the storage area, the information processing apparatus comprising: acquisition means configured to acquire status information indicating a working status of the processing means from the apparatus; and control means configured to enable a user interface for receiving a user operation to store the data into the storage area if the control means determines that the processing means is working based on the status information.

Preferably, the information processing apparatus further comprising: readout means configured to read out registered area information from storage means in which the registered area information indicating a plurality of storage areas is stored in advance; and receiving means configured to receive area information indicating the storage area monitored by the processing means from the apparatus, wherein the control means enables a user interface corresponding to a storage area of the area information received by the receiving means among user interfaces respectively corresponding to the plurality of storage areas.

Preferably, the information processing apparatus further comprising: receiving means configured to receive data waited for to be stored in the storage area, together with area information indicating the storage area monitored by the processing means, from the apparatus, wherein the control means enables the user interface if the control means determines that a user operation is performed to select the data.

Preferably, the control means performs control to report that the data is not processed by the processing means, if the control means determines that the processing means does not access the data before a predetermined time has elapsed from reception of the user operation to store the data into the storage area via the user interface.

Another embodiment of the invention can provide an information processing method for an information processing apparatus including processing means configured to monitor a storage area and to process data in response to the data being stored into the storage area, and storage means configured to store setting information containing area information indicating the storage area monitored by the processing means, the information processing method comprising: reading out, via readout means, the setting information from the storage means; and determining, via control means, whether the storage area monitored by the processing means exists based on the setting information, and enabling a user interface for receiving a user operation to store the data into the storage area determined to exist.

Another embodiment of the invention can provide an information processing method for an information processing apparatus connected for communication to an apparatus including processing means configured to monitor a storage area and to process data in response to the data being stored into the storage area, the information processing method comprising: acquiring, via acquisition means, status information indicating a working status of the processing means from the apparatus; and enabling, via control means, a user interface for receiving a user operation to store the data into the storage area if it is determined that the processing means is working based on the status information.

Another embodiment of the invention can provide a program that causes a computer, including processing means configured to monitor a storage area and to process data in response to the data being stored into the storage area, and storage means configured to store setting information containing area information indicating the storage area monitored by the processing means, to function as: readout means configured to read out the setting information from the storage means; and
control means configured to determine whether the storage area monitored by the processing means exists based on the setting information, and to enable a user interface for receiving a user operation to store the data into the storage area determined to exist.

Another embodiment of the invention can provide a program that causes a computer, connected for communication to an apparatus including processing means configured to monitor a storage area and to process data in response to the data being stored into the storage area, to function as: acquisition means configured to acquire status information indicating a working status of the processing means from the apparatus; and control means configured to enable a user interface for receiving a user operation to store the data into the storage area if it is determined that the processing means is working based on the status information.

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. An information processing apparatus (110) comprising:
first processing means (205) configured to monitor (307) a storage area and to process data in response to the data being stored into the storage area;
storage means (109) configured to store setting information containing area information indicating the storage area monitored by the first processing means (205); and
second processing means (204) for transmitting data to the first processing means (205) via the storage area monitored by the first processing means (205);
the second processing means (204) comprising:
control means (304, 303) configured to read out the setting information from the storage means (109), to determine whether the storage area monitored by the first processing means (205) exists based on the setting information, and to enable a user interface (501, 505) for receiving a user operation to store the data into the storage area determined to exist.

2. An information processing apparatus according to claim 1, wherein the second processing means (204) is configured to register area information indicating a plurality of storage areas, and
wherein the control means (304, 303) is configured to enable a user interface (501, 505) corresponding to the storage area monitored by the first processing means (205) among user interfaces respectively corresponding to the plurality of storage areas.

3. An information processing apparatus according to claim 1 or 2, wherein the control means (304) is configured to determine whether the first processing means (205) is activated, and the control means is further configured to enable the user interface (501, 505) if the control means determines that the first processing means (205) is activated.

4. An information processing apparatus according to claim 3, wherein the control means is configured to activate the first processing means (205) if the control means (304) determines that the first processing means is not activated.

5. An information processing apparatus (805) connectable for communication to an apparatus (802, 803, 804) including first processing means (902) configured to monitor a storage area and to process data in response to the data being stored into the storage area, the information processing apparatus (805) comprising:
second processing means (901) for transmitting data to the first processing means (902) via the storage area monitored by the first processing means (902); the second processing means (901) comprising:
acquisition means (1002, 1005) configured to acquire status information indicating a working status of the first processing means (902) from the apparatus (802, 803, 804); and
control means (1005, 1004) configured to determine whether the first processing means (902) is working based on the status information, and to enable a user interface (1301, 1305, 1306, 1307) for receiving a user operation to store the data into the storage area if the control means determines that the first processing means (902) is working based on the status information.

6. An information processing apparatus according to claim 5, wherein the second processing means (901) is further configured to read out registered area information from storage means (109) in which the registered area information indicating a plurality of storage areas is stored in advance; and to receive area information (1204) indicating the storage area monitored by the first processing means (902) from the apparatus,
wherein the control means (1005, 1004) is configured to enable a user interface (1301, 1305, 1306, 1307) corresponding to a storage area of the area information received by the receiving means among user interfaces respectively corresponding to the plurality of storage areas.

7. An information processing apparatus according to claim 5, wherein the second processing means (901) is further configured to receive data waited for (1205) to be stored in the storage area, together with area information indicating the storage area monitored by the first processing means, from the apparatus,
wherein the control means (1005, 1004) is configured to enable the user interface (1301, 1305, 1306, 1307) if the control means determines that a user operation is performed to select the data to be stored.

8. An information processing apparatus according to claim 5, wherein the control means (1005) is configured to perform control to report that the data is not processed by the first processing means (902), if the control means determines that the processing means does not access the data before a predetermined time has elapsed from reception of the user operation to store the data into the storage area via the user interface.

9. An information processing method for an information processing apparatus (110) including first processing means (205) configured to monitor a storage area and to process data in response to the data being stored into the storage area, storage means (109) configured to store setting information containing area information indicating the storage area monitored by the first processing means (205), and second processing means (204) for transmitting data to the first processing means (205) via the storage area monitored by the first processing means (205), the information processing method comprising:
a process to be executed in the second processing means (204), said process including:
reading out (S401) the setting information from the storage means (109); and
determining (S401) whether the storage area monitored by the first processing means (205) exists based on the setting information, and enabling (S402) a user interface (501, 504) for receiving a user operation to store the data into the storage area determined to exist.

10. An information processing method for an information processing apparatus (805) connected for communication to an apparatus (802, 803, 804) including first processing means (902) configured to monitor a storage area and to process data in response to the data being stored into the storage area, the information processing apparatus (805) comprising second processing means (901) for transmitting data to the first processing means (902) via the storage area monitored by the first processing means (902); the information processing method comprising:
a process to be executed in the second processing means (901), said process including:
acquiring (S1103, S1104) status information indicating a working status of the first processing means (902) from the apparatus (802, 803, 804);
determining (S1105) whether the first processing means (902) is working based on the status information; and
enabling (S1107) a user interface (1301, 1305, 1306, 1307) for receiving a user operation to store the data into the storage area if it is determined that the first processing means (902) is working based on the status information.

11. A program which, when executed by a computer, causes an information processing apparatus to carry out the information processing method of claim 9 or claim 10.

12. A program which, when loaded into a computer of an information processing apparatus, causes the information processing apparatus to function as the information processing apparatus of any one of claims 1 to 8.

13. A storage medium storing the computer program according to claim 11 or 12.
